# EUROPÄISCHE PATENTSCHRIFT

(11) **EP 1 775 331 B1**
(45) Veröffentlichungstag und Bekanntmachung des Hinweises auf die Patenterteilung: **24.12.2008**
(21) Anmeldenummer: 06121608.1
(22) Anmeldetag: 02.10.2006
(51) Int. Cl.: C09J 7/02, B32B 27/08

(54) **Verfahren zur Herstellunge eines weiterreißfesten Folienklebebands**
Process for the production of a tear resistant adhesive film tape
Procédé de fabrication d'un film adhésif résistant à la rupture

(30) Priorität: 12.10.2005 DE 102005049342
(43) Veröffentlichungstag der Anmeldung: 18.04.2007
(73) Patentinhaber: tesa AG, 20253 Hamburg (DE)
(72) Erfinder: Rodewald, Ilse, 22527, Hamburg (DE)

(56) Entgegenhaltungen:
- EP-A2- 0 343 896
- US-A- 2 750 315

## Beschreibung

Die Erfindung betrifft ein Verfahren zur Herstellung eines Klebebands mit einem in Längsrichtung gereckten Folienträger, welcher durch die Erzeugung mehrerer unverletzter Folienseitenkanten über die Breite des Klebebandes gegen Weiterreißen geschützt ist.

Das Problem der Weiterreißfestigkeit von Trägermaterialien von Klebebändern ist hinreichend bekannt. Folien, welche man zum Erreichen einer hohen Längszugfestigkeit monoaxial verstreckt, haben üblicherweise den Nachteil einer drastisch verringerten Weiterreißfestigkeit.

Lösungen für dieses Problem beruhen auf verschiedenen Ansätzen, z. B. auf der Faserverstärkung des Trägermaterials. Marktüblich sind so genannte "Filament"-Klebebänder mit unidirektionalen Längs-Gelegen oder bidirektionalen Geweben oder Gelegen, die aus gezwirnten oder getengelten Garnen bestehen. Diese Garne können zum Beispiel aus künstlichen Endlosfasern, aber auch aus Naturfasern bestehen. Die Fasern dieser Art Klebebänder sind jedoch stets zusammengehaltenen zu örtlich fixierten Faser- oder Filamentbündeln.

Die so eingebrachten Fasern können zusätzlich zur Aufgabe der Erhöhung der Weitereißfestigkeit einen variablen Anteil der Zugfestigkeit übernehmen, womit das Problem der Weiterreißfestigkeit von Folienträgern gelöst werden soll.

Faserverstärkte Trägerfolien weisen jedoch etliche Nachteile auf. Glasfilamente sind zum Beispiel nicht knickbruchbeständig. Weiter sind bei Filamentverstärkungen die Fasern nicht gleichlang und weisen keine strenge Ordnung auf, was dazu führt, dass gerichtete Zugkräfte nicht effektiv aufgenommen werden können. Und zusätzlich erfahren bei Webstrukturen eines Gewebes die Kett-Fäden an deren Knotenpunkten eine zusätzliche Auslenkung in z-Richtung. Diese zusätzliche Länge muss bei Zugbelastung zunächst herangezogen werden, bevor die zugfesten Eigenschaften des Garnes zum Tragen kommen. Außerdem ist eine Reduzierung der Klebebanddicke hierdurch sehr schwierig.

Eine andere Lösung für dieses Problem wird z.B. eine gereckte Folie aus mindestens zwei coextrudierten Schichten unterschiedlicher Zusammensetzung mit einer unregelmäßigen inneren Struktur angeboten, wie in DE 199 55 610 A1 dargelegt. Die Dicke einer dieser Schichten variiert hier umgekehrt proportional zu der zweiten Schicht über die Breite des Klebebandes, die Gesamtdicke ist konstant. Ein in Querrichtung beginnender Riss wird durch die unterschiedlichen mechanischen Eigenschaften der Schichten in Längsrichtung umgelenkt. Ein augenfälliger Nachteil dieses Verfahrens ist jedoch die aufwendige maschinentechnische Ausstattung, die zur Herstellung dieses Folientyps erforderlich ist.

In einigen Dokumenten des Stands der Technik wird eine verstärkende Rippenstruktur beschrieben, so in der EP 343 896 A, US 5,145,544 und US 5,173,141. Hierbei ragen die Rippen zum Teil aus der Oberfläche heraus und sind zum Teil in die Folienoberfläche eingebettet. Zwischen Folie und Rippen sind Kerbfugen ausgebildet. Wesentlicher Mangel dabei ist, dass sie nicht im Produktionsmaßstab herstellbar ist. Weitere Nachteile sind in der oben genannten DE 199 55 610 A1 aufgeführt.

Aufgabe der Erfindung ist es, ein Verfahren zur Herstellung eines Klebebands zur Verfügung zu stellen, das bei vergleichsweiser geringer Dicke eine in Querrichtung (cross direction, cd) sehr hohe Weiterreißfestigkeit und eine in Längsrichtung (machine direction, md) sehr hohe Zugfestigkeit aufweist.

Gelöst wird die Aufgabe durch ein Verfahren zur Herstellung eines Klebebands, wie es im Hauptanspruch beschrieben ist. Die Unteransprüche betreffen vorteilhafte Ausführungsformen des erfindungsgemäßen Klebebandes.

Entsprechend betrifft der Hauptanspruch ein Verfahren zur Herstellung eines Klebebandes mit einem Träger aus einem Polymermaterial und einer Klebemasse, wobei das Trägermaterial aus einer Vielzahl von in Längsrichtung gereckter Streifen besteht, die in Längsrichtung ausgerichtet sind, wobei die Vielzahl von Streifen mittels einer Hilfsträgerfolie miteinander fixiert sind, **dadurch gekennzeichnet, dass**
- eine extrudierte Monofolie im Anschluss an die Extrusion vielfach in Längsrichtung geschlitzt wird, so dass viele nebeneinander liegende Folienstreifen entstehen,
- die Folienstreifen im Folgenden gereckt werden,
- die gereckten Folienstreifen mit Hilfe der Hilfsträgerfolie nebeneinander fixiert werden.

Im Gegensatz zu den im Stand der Technik vorgeschlagenen Lösungen erfordert die vorliegende Erfindung weder verstärkende Filamente noch eine Folie mit mehreren coextrudierten Schichten.
Das hier zugrunde liegende Klebeband verhält sich bezüglich seiner Zugfestigkeit ähnlich wie ein Folienklebeband mit einer konventionell gereckten Monofolie. Darüber hinaus ermöglicht die vorliegende Erfindung durch die Erzeugung vieler intakter und unverletzter Folienseitenkanten über die Breite des Klebebandes die geforderte Weiterreißfestigkeit.

Ein Klebeband mit gerecktem Folienträger wie z.B. MOPP hat bei unverletzter Seitenkante eine gute Einreißfestigkeit. Wurde die Seitenkante jedoch beabsichtigt oder unbeabsichtigt beschädigt, ist die Weitereißfestigkeit gering. In der vorliegenden Erfindung ersetzt im Falle der seitlichen Beschädigung eine der sich weiter im Innern des Klebebandes befindlichen Kanten die beschädigte äußere Kante und versetzt so das Klebeband für den Rest der verbleibenden tragenden Breite in einen quasi unverletzten Zustand zurück.

Entsprechend besteht der Träger des erfindungsgemäßen Klebebandes aus einem Verbund aus Polymermaterialien, wobei auf einer Seite einer ersten Folie, der vorgenannten Hilfsträgerfolie, eine Vielzahl von Folienstreifen vorgesehen sind. Diese Folienstreifen verlaufen parallel und sehr bevorzugt in Längsrichtung des Klebebandes, damit die Folienseitenkanten der einzelnen Folienstreifen parallel zu den Seitenkanten des Klebebandes ausgerichtet sind. Vorteilhaft sind die Folienstreifen in Längsrichtung gereckt.

Die Streifen können unterschiedliche Breiten aufweisen. Insbesondere bevorzugt ist es aber, wenn alle Streifen die gleiche Breite aufweisen. Dabei kann sich herstellungsbedingt eine abweichende Breite der beiden außenliegenden Streifen ergeben.

Um durch die Streifen zusätzliche innere Kanten zu schaffen, sind im Sinne der vorgenannten Vielzahl zumindest zwei Folienstreifen vorgesehen. Die Schnittkante kann dann mittig angeordnet sein, so dass die beiden Streifen gleich breit sind. Es können aber auch "unsymmetrische" Klebestreifen hergestellt werden, bei denen der eine Streifen breiter ist als der zweite Streifen und insbesondere die Weitereinreißbarkeit von der Seite des schmaleren Streifens her reduziert wurde.

Die Zahl der Streifen lässt sich im Prinzip beliebig erhöhen, wobei durch die Breite des Klebebandes und die Streifenbreite die Obergrenze der Streifenzahl bedingt wird. So lassen sich beispielsweise auch symmetrische oder unsymmetrische Klebebänder mit drei Streifen herstellen, beispielsweise solche, bei denen in der Nähe der Klebebandkanten jeweils eine innere Kante als Rissgrenze vorgesehen ist.

Die Breite der Streifen liegt besonders bevorzugt zwischen 1 und 4 mm, sehr bevorzugt bei etwa 2 mm. Insbesondere bei Streifen, die eine geringe Breite im Verhältnis zur Breite des Klebebandes aufweisen, ist eine gleiche Streifenbreite von Vorteil.

Vorteilhaft liegen die Streifen dicht an dicht, ohne sich aber zu überlappen. Zwischen den Streifen können auch Lücken vorgesehen sein, insbesondere dadurch, dass diese durch "Verschmälerung" beim Recken der zunächst unverstreckten Streifen entstehen. Bevorzugt übersteigt die Breite der Lücken aus Gründen der Stabilität dabei nicht die Hälfte der Breite der Streifen.

In einer weiteren Ausführungsform der Erfindung sind allerdings breitere Lücken vorgesehen, insbesondere aus Gründen der Materialersparnis. Die Breite der Lücken kann dann insbesondere vorteilhaft bis zur Breite der Streifen ausgeführt werden, diese aber auch noch übersteigen.

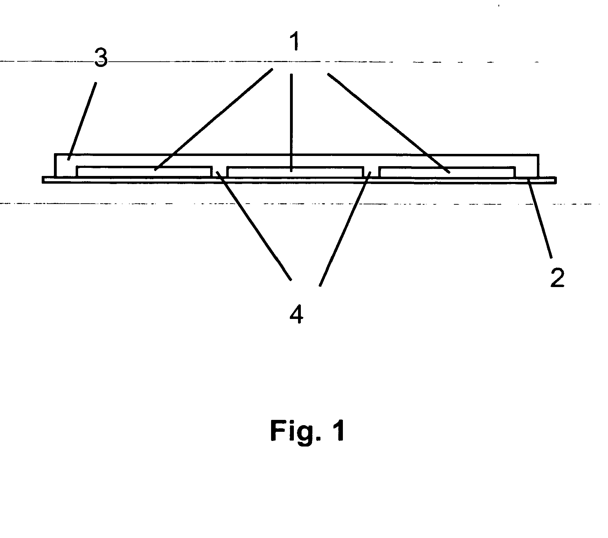

Fig. 1 stellt schematisch den Aufbau eines Klebebandes im Querschnitt dar, das nach dem erfindungsgemäßen Verfahren hergestellt wurde, wobei parallel angeordnete Folienstreifen (1) auf einer Trägerfolie (2) vorgesehen sind. In der beispielhaften Darstellung ist auf Seiten der Folienstreifen eine Schicht einer Haftklebemasse (3) aufgebracht. In der dargestellten Ausführungsform befinden sich zwischen den einzelnen Streifen (1) Lücken (4).

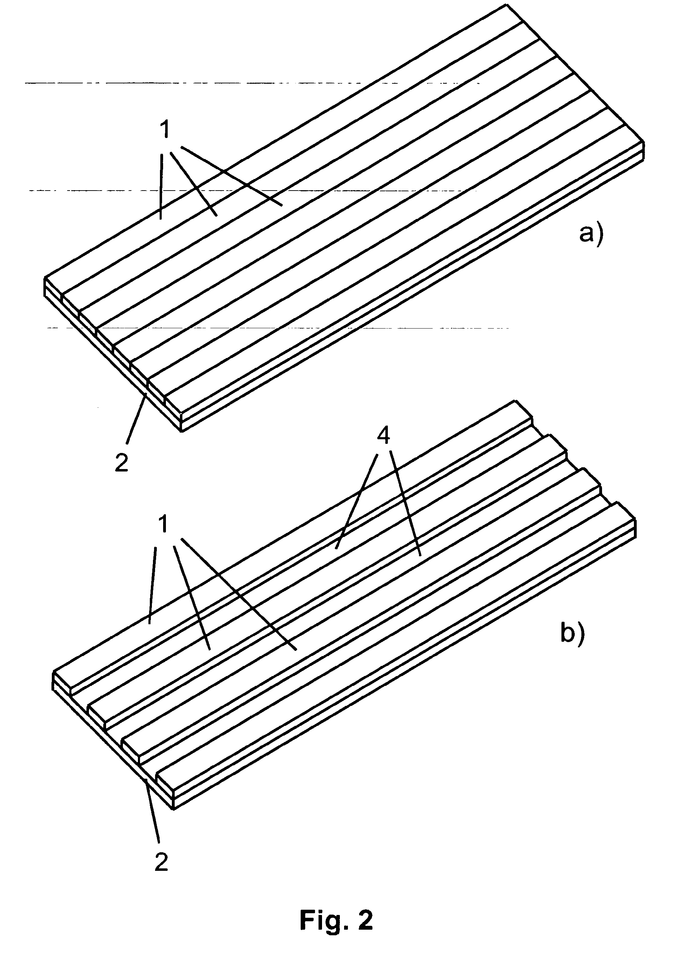

Fig. 2a) zeigt schematisch eine Anordnung der dicht an dicht liegenden Streifen (1) auf einer Hilfsträgerfolie (2), wobei zur besseren Erkennbarkeit die Klebmassenschicht nicht dargestellt ist. Fig 2 b) zeigt eine entsprechende Anordnung, bei der zwischen den Streifen (1) Lücken (4) vorgesehen sind.

Ein bevorzugtes Beispiel eines Klebebandes weist etwa 2 mm breite Streifen bei einer Klebebandbreite von etwa 15 mm auf, wobei die Breite jeder Lücken die halbe Streifenbreite nicht überschreitet.

Bei einem Weg zur Erzeugung unverletzten Folienseitenkanten wird eine extrudierte Monofolie im Anschluss an die Extrusion vielfach in Längsrichtung geschlitzt, so dass viele nebeneinander liegende Folienstreifen entstehen. Um der Folie die nötige Längsfestigkeit zu verleihen, werden die einzelnen Folienstreifen im Folgenden gereckt. Das Recken der Folienstreifen kann, vergleichbar dem Recken einer Folie in voller Maschinenbreite, nach einem marktüblichen Folienreckverfahren erfolgen. Die Reckung der Folienstreifen erfolgt besonders bevorzugt in Längsrichtung der Streifen.

Zur besseren Weiterverarbeitung, wie z.B. insbesondere der Beschichtung mit Haftklebmasse, werden die Folienstreifen nebeneinander fixiert. Die Fixierung erfolgt vorzugsweise mit Hilfe einer weiteren Folie ("Hilfsträgerfolie"), welche z. B. durch Extrusion auf die Folienstreifen aufgebracht wird.

Die gereckten Folienstreifen können aus verschiedensten Materialien (zum Beispiel MOPP, PP, PE, PET, PA, PU, PVC) bestehen. Es eignen sich vorzugsweise alle Polymere, welche auch für konventionell gereckte Folien eingesetzt werden, wie z.B. Polypropylen zur Fertigung von MOPP. Die Dicke der Folien, welche die Streifen bilden, beträgt bevorzugt 20 bis 80 µm, besonders bevorzugt 40 bis 70 µm.

Unabhängig vom Polymer der gereckten Folienstreifen kann das Material der fixierenden Hilfsträgerfolie frei gewählt werden, wobei insbesondere die bereits vorgenannten Materialien eingesetzt werden können. Es eignen sich vorzugsweise Polymere, welche dem Klebeband eine glatte und leicht abrollende Rückseite verleihen, wie z.B. Polyethylen. Die Dicke der Hilfsträgerfolie beträgt bevorzugt 8 bis 20 µm, besonders bevorzugt 10 µm.

Die oben genannten Schritte führen zu Klebebändern mit hoher Festigkeit, die aber in ihrer Dicke deutlich unter Klebebändern des Standes der Technik für entsprechende Einsatzgebiete liegen. So lassen sich Klebebänder von unter 140 µm, besonders von unter 100 µm, ganz besonders von unter 70 µm erzeugen.

Beispielsweise wurde ein Verbundträgermaterial mit einer Festigkeit von ca. 300 N/mm² bei einer Dicke von höchstens 60 µm erreicht, welches als Trägermaterial für das erfindungsgemäße Klebeband sehr geeignet ist.

Ähnlich wie bei Filament-Garnen stellen die Folienstreifen einen periodisch wiederkehrenden Rissstopp dar. Im Gegensatz zu jenen bieten Folienstreifen jedoch den Vorteil, dass die Frequenz der Rissstopp-Stellen in gewissen Grenzen unabhängig vom Materialeinsatz variiert werden kann.

Gegenüber Filament-Klebebändern ergeben sich durch das für das erfindungsgemäße Klebeband eingesetzte Trägermaterial diverse Vorteile. Extrudier- und reckbare Folienmaterialien sind grundsätzlich knickbruchbeständig, eine Eigenschaft, welche z.B. bei Glasfilamenten nicht gegeben ist.

Im Gegensatz zu verzwirnten oder vertengelten Filamenten haben die parallel ausgerichteten Folienstreifen dieselbe minimale Länge. Eine auftretende parallele Zugkraft wirkt so auf jeden Folienstreifen unmittelbar und wird gleichzeitig bedarfsgerecht von mehreren Streifen übernommen. Dies führt zu einer besonders effektiven Kraftaufnahme.

Im Vergleich zu einem "Cross-Filament"-Tape ergibt sich noch ein weiterer Vorteil. Durch die Webstruktur eines Gewebes erfahren die Kett-Fäden dort an den Knotenpunkten eine zusätzliche Auslenkung in z-Richtung, mit der oben beschriebenen Auswirkung auf das Verhalten bei Zugbelastung. Bei dem erfindungsgemäßen Klebeband hingegen wirkt die Belastung unmittelbar auf die Folienstreifen, wodurch eine optimale Kraftaufnahme möglich ist.

Im Gegensatz zu Filamentklebebändern wird zudem im Querschnitt die Dicke nivelliert. Die Folienstreifen sind wesentlich dünner als rundliche Filamentbündel und sie liegen dicht nebeneinander, insbesondere nur durch geringe Lücken getrennt, welche durch die Einschnürung beim Recken entstehen. Diese Nivellierung führt zu einer Reduktion der maximalen Trägerdicke des Klebebandes.

Durch das Recken unter Spannung ist die Anordnung der Folienstreifen exakt parallel und sehr gleichmäßig geschaffen werden, Überlagerungen werden vermieden. Dies trägt ebenfalls zu einer optimalen Raumausnutzung und Minimierung der Dicke bei.

Für das Klebeband, das nach dem erfindungsgemäßen Verfahren hergestellt wurde, ist der Verbund aus den flächig angeordneten Folienstreifen und der Hilfsträgerfolie mit einer Klebemasse, insbesondere einer Haftklebemasse ausgerüstet. Dabei kann es sinnvoll sein, die mit der Haftklebemasse zu versehende Folienseite zunächst mit einem Primer ("Vorstrich") zu versehen.

Die Klebemasse ist vorteilhaft auf der Seite des Verbundes vorgesehen, auf welcher die Folienstreifen liegen. Im erfindungsgemäßen Gedanken eingeschlossen ist aber auch ein Klebeband, bei welchem die (Haft-)Klebemasse auf Seiten der Hilfsträgerfolie vorgesehen ist.

Der Folienverbund kann auch als Träger für ein doppelseitiges (Haft-)Klebeband eingesetzt werden, bei welchem also sowohl auf Seiten der Folienstreifen als auch auf Seiten der Hilfsträgerfolie jeweils eine (Haft-)Klebemasse vorgesehen ist. Auf diese Art kann auch ein weiterreißfestes doppelseitiges Klebeband zur Verfügung gestellt werden, welche die Nachteile des Standes der Technik vermeidet.

Die Klebemasse der Klebebänder kann eine (Selbst-)Klebemasse sein, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS) und Styrol-Butadien-Styrol (SBS)-Typen.

Auch eine reine SIS-Masse kann hervorragend eingesetzt werden.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird.

Die Klebemasse auf Acrylathotmelt-Basis kann aber auch chemisch vernetzt sein.

In einer bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal ®, insbesondere Acronal ® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Der Auftrag an Klebemasse liegt vorzugsweise zwischen 15 bis 60, besonders bevorzugt 30 g/m².

Schließlich kann das Klebeband ein Abdeckmaterial aufweisen, mir dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Eine Haftklebemasse benötigt, um haftklebrig zu sein, eine gewisse Mindestschichtdicke, abhängig von der Art des Haftklebers. Diese Mindestschichtdicke sollte sehr bevorzugt über die gesamte Breite des Klebebandes erreicht werden. Liegt eine ungleichmäßige Faserverteilung wie z.B. im Falle der Faserbündel vor, so bestimmt der höchste Punkt im Querschnitt des Klebebandes den erforderlichen Masseauftrag, da auch auf den Faserrücken bzw. auch auf den Knotenpunkten in offenen Filament Geweben die erforderliche Mindestschichtdicke gegeben sein muss. Zur Auffüllung der Lücken zwischen den Faserbündeln geht viel Klebmasse ungenutzt verloren.

Ein weiterer Vorteil der vorliegenden Erfindung beruht folglich darauf, dass bei Verwendung von Folienstreifen als Trägermaterial keine großvolumigen Lücken zwischen denselben vorliegen, welche zum Erreichen der Mindestschichtdicke über die gesamte Breite des Klebebandes aufgefüllt werden müssten. Da die gesamte Klebmasse effektiv für die Verklebungsleistung zur Verfügung steht, kann zur Erzielung der gleichen Klebkraft eine dünnere Klebmassenschicht aufgetragen sein, also weniger Klebmasse verwendet werden. Darüber hinaus benötigt man keine Masseschicht, welche üblicherweise die Filamentbündel auf ihre Trägerfolie fixiert. Beides gemeinsam führt zu einer Material- und damit sowohl zu einer Kosten- als auch Gewichtsersparnis.

Vorteilhaft lässt sich das Klebeband in den Anwendungsfeldern, wie sie in der US 2,750,315 beschrieben sind, einsetzen. Dazu zählen zum Beispiel das Bündeln, das Verpacken, das Palettisieren, die Verwendung ähnlich einem Spanngurtes etc. Die Gemeinsamkeit der genannten Anwendungen ist die Fixierung eines oder mehrerer Gegenstände an sich selbst, aneinander oder an weiteren Objekten.

Neben den oben genannten Anwendungen ist das Tape hervorragend geeignet, für alle Aufgaben, bei denen eine verstärkende Wirkung last-tragender Elemente in Kombination oder wahlweise einzeln mit Ein- und Weiterreißfestigkeit benötigt wird.

Verstärkt werden können z.B. Materialien wie Papier, Well- oder Vollpappe vorzugsweise an exponierten Stellen wie Eingriffen, Henkeln und Auslässen. Außerdem kann das Tape als konstruktives Element verwendet werden um z.B. das Ausbeulen schwererer Verpackungen zu verhindern. Hieraus ergeben sich Vorteile wie
- Das Aufwerten von Verpackungen für höhere Beanspruchungen
- Die Reduktion des Gesamtmaterialeinsatzes durch gezielte Verstärkung der Hauptbelastungszonen
- Erhöhung der Verwendungsdauer einer Verpackung

Der Verbund aus Polymermaterialien, bei dem auf einer Seite einer Hilfsträgerfolie eine Vielzahl von Folienstreifen vorgesehen sind und wie er als Trägermaterial für die vorstehend dargestellten Klebebänder verwendet wird, lässt sich auch an sich, also ohne die Klebemassen, sehr gut als Überzugs- oder Schutzfolienmaterial einsetzen, insbesondere immer dort, wo die Folie erhöhten mechanischen Beanspruchungen ausgesetzt ist und somit Gefahr läuft, leicht einzureißen. Die Folien nach dem Stand der Technik zeigen dann entweder die beschriebene Neigung zur Weiterreißung oder erfordern die Anfangs beschriebenen Aufwendungen zur Erzeilung einreiß- oder weiterreißfester Folien. Die vorgenannte Folie ermöglicht auch hier die Anbietung einer reißfesten Folie, ohne die Nachteile des Standes der Technik aufzuzeigen.

## Patentansprüche

1. Verfahren zur Herstellung eines Klebebandes mit einem Träger aus einem Polymermaterial und einer Klebemasse, wobei das Trägermaterial aus einer Vielzahl von in Längsrichtung gereckter Streifen besteht, die in Längsrichtung ausgerichtet sind, wobei die Vielzahl von Streifen mittels einer Hilfsträgerfolie miteinander fixiert sind, **dadurch gekennzeichnet, dass**
• eine extrudierte Monofolie im Anschluss an die Extrusion vielfach in Längsrichtung geschlitzt wird, so dass viele nebeneinander liegende Folienstreifen entstehen,
• die Folienstreifen im Folgenden gereckt werden,
• die gereckten Folienstreifen mit Hilfe der Hilfsträgerfolie nebeneinander fixiert werden.

2. Verfahren nach Anspruch 1, **dadurch gekennzeichnet, dass**
die gereckten Streifen und die Hilfsträgerfolie durch Extrusion miteinander verbunden werden.

3. Verfahren nach einem der vorangehenden Ansprüche, **dadurch gekennzeichnet, dass** Die Hilfsträgerfolie auf der der Klebemasse abgewandeten Seite vorgesehen ist.

4. Verfahren nach einem der vorangehenden Ansprüche, **dadurch gekennzeichnet, dass** die Klebemasse eine Haftklebemasse ist.

## Claims

1. Process for producing an adhesive tape with a backing of a polymer material and with an adhesive,
the backing material being composed of a multiplicity of strips which are oriented in machine direction and aligned in machine direction, the multiplicity of strips being fixed to one another by means of an auxiliary backing film, **characterized in that**
• an extruded monofilm, following extrusion, is slit multiply in machine direction, producing a multiplicity of film strips lying adjacent to one another,
• the film strips are subsequently oriented,
• the oriented film strips are fixed adjacently to one another using the auxiliary backing film.

2. Process according to Claim 1, **characterized in that**
the oriented strips and the auxiliary backing film are joined to one another by extrusion.

3. Process according to either of the preceding claims, **characterized in that**
the auxiliary backing film is provided on the side facing away from the adhesive.

4. Process according to any one of the preceding claims, **characterized in that**
the adhesive is a pressure-sensitive adhesive.

## Revendications

1. Procédé pour la fabrication d'un ruban adhésif comportant un support à base d'un matériau polymère et d'une matière adhésive, le matériau de support consistant en une multiplicité de bandes étirées dans le sens de la longueur, qui sont orientées dans le sens de la longueur, la multiplicité de bandes étant fixées entre elles au moyen d'un film de support auxiliaire,
**caractérisé en ce que**
• à la suite de l'extrusion un film monocouche est fendu plusieurs fois dans le sens de la longueur, de sorte qu'il en résulte de nombreuses bandes de film se trouvant les unes à côté des autres,
• les bandes de film sont ensuite étirées,
• les bandes de film sont fixées les unes à côté des autres à l'aide d'un film de support auxiliaire.

2. Procédé selon la revendication 1, **caractérisé en ce que** les bandes étirées et le film de support auxiliaire sont liés entre eux par extrusion.

3. Procédé selon l'une quelconque des revendications précédentes, **caractérisé en ce que** le film de support auxiliaire est prévu sur la face tournée vers la matière adhésive.

4. Procédé selon l'une quelconque des revendications précédentes, **caractérisé en ce que** la matière adhésive est une matière autoadhésive.
